# EUROPEAN PATENT SPECIFICATION

(11) **EP 1 531 598 B1**
(45) Date of publication and mention of the grant of the patent: **27.07.2011**
(21) Application number: 04026173.7
(22) Date of filing: 04.11.2004
(51) Int. Cl.: H04L 29/06, G06F 13/30, G06F 17/30, G06F 3/033

(54) **Speed browsing of media items in a media diary application**
Schnelles Browsen von Media-Artikeln in einer Tagebuch-Medien-Anwendung
Exploration rapide d'éléments multimédia dans une application de média journal

(30) Priority: 17.11.2003 US 715095
(43) Date of publication of application: 18.05.2005
(73) Proprietor: Nokia Corporation, 02150 Espoo (FI)
(72) Inventor: Oksanen, Olli, 00100 Helsinki (FI); Lindholm, Christian, 00150 Helsinki (FI)
(74) Representative: Becker Kurig Straus

(56) References cited:
- EP-A- 1 035 481
- EP-A- 1 087 303
- WO-A2-02/057959
- KOIKE Y ET AL: "TimeSlider: an interface to specify time point" PROCEEDINGS OF THE ACM SYMPOSIUM ON USER INTERFACE SOFTWARE AND TECHNOLOGY. 10TH ANNUAL SYMPOSIUM. UIST '97 ACM NEW YORK, NY, USA, 1997, pages 43-44, XP009074765 ISBN: 0-89791-881-9
- GIRGENSOHN A ET AL.: "Simplifying the Management of Large Photo Collections" PROCEEDINGS OF 9TH IFIP INTERNATIONAL CONFERENCE ON HUMAN-COMPUTER INTERACTION INTERACT'03, SEPTEMBER 1-5, 2003, ZÜRICH, SWITZERLAND, 1 September 2003 (2003-09-01), pages 196-203, XP002407104 IOS Press ISBN: 1 58603 363 8
- HÜRST W ET AL: "User interfaces for browsing and navigation of continuous multimedia data" PROCEEDINGS OF THE 2ND NORDIC CONFERENCE ON HUMAN-COMPUTER INTERACTION, AARHUS, DENMARK, vol. 31, 19 October 2002 (2002-10-19), pages 267-270, XP002407105 ACM Press ISBN: 1-58113-616-1

## Description

### FIELD OF THE INVENTION

The present invention relates to digital storage and management of media files and, more specifically, to a media file management application that incorporates a browsing mechanism for locating media files.

### BACKGROUND OF THE INVENTION

The rapid growth of digital communication has made it possible for all kinds of digital media items to be communicated amongst various types of wireless and wire line communication devices. For instance, the cellular or mobile telephone is no longer limited to telephonic voice communication and may include other means of digital communication, such as digital networking (i.e., Internet communication, text messaging, and the like). In addition, an increasing number of cellular telephones and other mobile wireless communication devices, such as portable computers, personal data assistants (PDAs) and the like, are being integrated with other means of capturing or producing digital media, such as digital cameras, digital audio recorders, digital video recorders and the like. Technological advances have made it possible for other digital devices, such as digital cameras, digital video recorders, digital audio devices and the like to be equipped with means for digital communication. As more and more digital devices possess the capability to digitally communicate with one another, the amount of digital media items that will be communicated amongst these devices will increase at an alarming rate.

In addition to the onset of more and more digital devices possessing digital communication capabilities, the digital storage capacity of these devices is constantly increasing. In the near future the majority of mobile digital communication terminals may well be equipped with storage capacity in the gigabyte range or greater, allowing these devices to store an enormous amount of digital data. In this environment it will no longer be prohibitive from a memory capacity standpoint to store a voluminous amount of large file types, such as video, audio or other multimedia files.

In the digital communication environment where more and more digital devices, both wireless and wired, are equipped with a means for digital communication and where the storage capacity of these devices has become seemingly endless, the digital communication device will encounter and store innumerable digital media files. As such, the digital communication device will desire a means to access, store, manage and further communicate these digital files in an efficient and user-friendly environment.

For example, if a digital communication device receives a digital media file the user of the device would benefit greatly from an application that automatically places the file into a readily accessible storage area and where managing and accessing of the file in the future can occur efficiently, without the user having to spend a great deal of time searching for the media file.

Most digital communication devices, such as desktop or laptop computers, personal data assistants (PDAs) or the like either come equipped or can be configured by the user to implement a daily planner application. The daily planner allows the user coordinate and manage their upcoming schedule of events by inputting event reminders in a digital calendar. The digital planner provides the unique benefit of sending the user electronic reminders, in the form of alarms or visual or audible messages, when an upcoming event is pending. The digital planner has proven to be a highly successful tool for the businessperson and, in most instances, has replaced the need for conventional hard copy or paper daily planners.

Most digital media files can be easily categorized and stored according to a calendar date. For example, a wedding video can be categorized according to the date of the wedding and photographs taken at a party can be categorized according to the date of the party. These are examples of categorizing the media file based on the creation date of the media file. In other instances the media file can be associated with the date on which the media file is used or presented or the date on which the recipient receives the file. For example, a multimedia presentation for a business meeting may be categorized according to the date of the presentation and a personal text file from a friend may be categorized according to the date received.

Over time, digital devices with large memory capacity possess the capability to acquire and store an enormous volume of media files. This is especially true as we enter a burgeoning digital communication era where more and more digital devices will possess the capability to communicate digitally. For example, in a future where more and multi-function digital devices are prevalent, such as mobile telephones with digital cameras and conventional digital cameras, digital video recorders and the like have the capability to communicate digitally, the devices will be inundated with digital media files. The user of these devices, and all other digital devices capable of media storage, will desire an application that stores and manages the digital media files. A key attribute for such an application is user efficiency; because the user must be able to efficiently locate media files.

An additional concern of handheld digital communication devices is that the devices are characteristically small in size to accommodate being held in one's hand. Applications that are implemented in such devices will gain acceptance by device users if the user can navigate them ergonomically. In this regard, applications that either minimize the amount of inputs required of the user or minimize the physical effort or discomfort encountered by the user's hand in making inputs is preferred.

Document WO 02/057959 relates to a method and apparatus for storing, cataloguing, managing, organizing, finding and displaying objects such as digital images. It describes methods for associating or "tagging" fields of text and numeric data or "metadata" with individual objects such as images or photos, storing the objects and associated metadata as records in a relational database, and selecting, sorting, organizing and finding the objects based on their tagged metadata content.

The document "TimeSlider: An Interface to Specify Time Point" by Yuichi Koike et al relates to a user interface which is a slider allowing users to specify a point in time by moving an indicator knob or clicking a point on the time scale.

The document EP 1 087 303 relates to a computer-based method and system for displaying hierarchically related information, particularly displaying of information within a carousel. The display system displays on a display information related to various categories within the hierarchy. The displayed information scrolls across the display so that a user need not continually interact with the computer to scroll the information. When a user selects the displayed information for a category, the display system displays information relating to subcategories within the selected category so that that information scrolls across the display.

The document EP 1 035 481 relates to information retrieval and display systems, and to the control thereof. It is concerned with simplifying and speeding up the selection and browsing of information by reducing the number of actions and/or the number of muscle movements that need to be performed by the user. According to this document this is achieved by providing a selecting device having first and second degrees of freedom, one of which causes scrolling and the other of which causes switching between information displayed.

Therefore, the need exists to develop a media file storage and management application for a digital device that will provide for the storage of a large volume of media files and user efficiency in terms of being able to quickly locate a specific media file. The media file storage and management application should be capable of associating and organizing the media files according to a period of time, such as a day, week or the like. As such, the media management application should provide the user with a system for easily navigating through the time periods in order to efficiently locate a media file.

### BRIEF SUMMARY OF THE INVENTION

The present invention provides for a media diary or media management application implemented in a digital device that incorporates a speed browsing mechanism. The speed browsing mechanism provides for the speed of the browsing or scrolling function to be altered depending on the desire of the user. For example, if the media diary currently displays time periods that are distant from the desired time period, the user will desire a rapid browsing function. Conversely, if the media diary currently displays time periods that are close to the desired time period, the user will desire a deliberate browsing function. The speed browser can be configured by the user to browse for time periods, specific types of media files, annotated or bookmarked media files or any other user designated browse-able parameter. The speed browsing mechanism of the present invention provides the device user with a highly efficient means of locating time periods and the media files associated with the time periods. In addition, the speed browsing mechanism provides ergonomic benefit to the user, in that, user inputs to the device are limited and the user inputs that are required are user-friendly.

In one embodiment of the invention an application for representing media files on a digital device includes a computer readable storage medium having computer-readable program instructions embodied in the medium. The computer-readable program instructions will include first instructions for generating a media view that provides access to digital media files and associates digital media files with a predefined time, and second instructions for generating a media handle that provides the ability to browse a view generated by the application over several periods of time. The instructions may also provide for a speed of browsing may be proportional to the distance that the handle is deviated from a centerline position on a digital device display. The second instructions may additionally include instructions for increasing the speed of browsing as the distance from the centerline position is increased and instructions for decreasing the speed of browsing as the distance from the centerline position is decreased. The second instructions may additionally include instructions to browse the media view and calendar view according to a chosen browse parameter. The chosen browse parameter may include time, media file type, metadata information, media file bookmarks, media file representation and the like. Additionally, the second instructions may include instructions for automatically decreasing the speed of the browsing when media files in accord with the chosen browse parameter are in, or enter, a viewable area of the display and increasing the speed of the browsing when media files in accord with the chosen browse parameter are not in, or bypass, the viewable area of the display. Typically, the first instructions for generating a media view will associate media files with a past period of time.

The invention may also be embodied in a digital device including a processing unit that executes computer-readable program instructions for accessing media files. The computer-readable program instructions comprising (1) first instructions for generating a media view that provides access to digital media files and associates digital media files with a predefined time, and (2) second instructions for generating a media handle that provides the ability to browse media view and calendar view over a period of time according to a chosen browse parameter. The second instructions may provide a speed of browsing that is proportional to the distance that the handle is deviated from a centerline position on a digital device display. Additionally, the digital device will include a display in communication with the processing unit that presents a combined view of the media view and the hierarchal time bar.

The invention may also be embodied in a method for browsing media files in a media application. The method includes the steps of providing for a media view and a media handle on a display associated with a device implementing the media application, deviating, the media handle, a distance from a centerline position on the display; and setting the browse speed according to the distance that the media handle deviates from the centerline position in order to locate a desired media file representation within the media view. In addition, the method may include the step of adjusting the deviation distance an appropriate amount and adjusting the browse speed according to the adjusted deviation distance to the desired media file within the media view. The method may also include the step of defining a browse parameter prior to deviating, the media handle, a distance from a centerline position on the display. The browse parameter being any browse-able search parameter, such as time, media file type, metadata information, media file bookmarks, media file representation and the like. Additionally, the method may include the step of automatically altering the browse speed when media files of a type associated with the desired media file are within the media view.

Therefore, the present invention provides for a media file storage and management application for a digital device that will provide for the storage of a large volume of media files and user efficiency in terms of being able to quickly locate a specific media file using the media handle / speed browser mechanism herein disclosed. The media file storage and management application is capable of associating and organizing the media files according to a period of time, such as a day, week or the like. As such, the media management application and, more specifically, the unique speed browser provides the user with a system for easily navigating through the time periods in order to efficiently locate a media file.

### BRIEF DESCRIPTION OF THE DRAWINGS

Having thus described the invention in general terms, reference will now be made to the accompanying drawings, which are not necessarily drawn to scale, and wherein:
Figure 1 is an illustration of a timeline view in combination with a calendar view and media view that incorporates a media handle / speed browser, in accordance with an embodiment of the present invention.
Figure 2 is an illustration of a calendar view or calendar window as displayed by the media diary.
Figure 3 is an illustration of media view or media window as displayed by the media diary.
Figure 4 is an illustration of a media view that incorporates a media handle / speed browser and a center line, in accordance with an embodiment of the present invention.
Figure 5 is an illustration of a media view that incorporates a media handle / speed browser, in accordance with an embodiment of the present invention.
Figure 6 is a block diagram of a digital device implementing a media diary that incorporates the use of a media handle / speed browser, in accordance with an embodiment of the present invention.
Figure 7 is a flow diagram of a method for browsing media files in a media diary application, in accordance with an embodiment of the present invention.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

The present invention provides for a media diary or media management application implemented in a digital device that incorporates a speed browsing mechanism. The browsing mechanism provides for the speed of the browsing or scrolling function to be altered. In a manual mode the user will dictate the browse speed and in automatic mode the media diary application will dictate the browse speed. For example, in the manual mode, if the media diary currently displays time periods that are distant from the desired time period, the user will desire a rapid browsing function. Conversely, if the media diary currently displays time periods that are close to the desired time period, the user will desire a deliberate browsing function. The automatic mode is typically implemented in conjunction with a search function and provides for search results to be presented by automatically speed browsing to the area of the media view where the searched files reside.

The browsing mechanism of the present invention, referred to herein as speed browsing, provides the device user with a highly efficient means of locating time periods and the media files associated with the time periods. In addition, the speed browsing mechanism provides ergonomic benefit to the user, in that, user inputs to the device may be limited and the user inputs that are required are user-friendly.

The media diary application of the present invention will associate media files with a predefined time, typically a moment of time or a period of time, or an event, so that the user can manage media files according to a moment of time, period of time or an event. Typically, the period of time will be a specific date associated with a date that the media file was created or intended for. For example, if the media file is an image or video file of a birthday party, the media application may categorize and store the file according to the date of the birthday party.

The media diary application may take the displayed form of a media view and calendar view combined with a timeline view or a media view in combination with the timeline view. In both embodiments of the media diary application the timeline view may incorporate the speed browser of the present invention.

The media diary application of the present invention may be implemented and executed on any electronic device that incorporates a display, such as a desktop or portable computer, cellular telephone, personal data assistant (PDA), digital camera, digital camcorder, e-book device, television, digital audio player or the like. In addition the media diary application may be implemented on electronic devices that are connected to an external display, such as a set-top box (STB), personal video recorder (PVR), digital video recorder (DVR) or the like. While in most implementations the digital device that executes the media diary application will be capable of any type of wireless or wireline network communication, such as wireless telecom, short range radio network, Bluetooth®, Wireless Local Area Network (WLAN), Radio Frequency Identification (RFID), Internet Protocol Data Casting (IPDC), Digital Video Broadcasting (DVB), Infrared Data Association (IrDa), Internet or the like, it is not required that the digital device be adapted to communicate via network. Devices that are capable of requiring digital media files internally or may access media files through memory devices (e.g., flash storage device, memory sticks, video and audio storage tapes, CD, DVD, removable hard disc device (HDD) and the like) are also applicable.

In accordance with an embodiment of the present invention, the media diary application will be embodied by a computer-readable storage medium having computer-readable program instructions stored in the medium. The storage medium will typically be a memory device, such as flash ROM memory, HDD or the like. The programming instructions may be written in a standard computer programming language, such as C++, Java or the like. Upon execution by a processing unit as described below, the program instructions will implement the various functions of the media diary application as described below. The computer-readable program instructions include first instructions that will generate a media view that provides access to digital media files and associates digital media files with a moment of time, period of time or event. The computer-readable program instructions will include second instructions that generate a speed browser that provides for the periods of time in the media view to be efficiently accessed. In another embodiment, the computer-readable program instructions include third instructions that will generate a calendar view that represents time in calendar format and associates events with respective time information, such as moment or periods of time. While the first, second and third instructions may be modules, objects or the like that communicate with one another, the first, second and third instructions need not be discrete or separable portions of the program instructions and may be interspersed throughout if so desired.

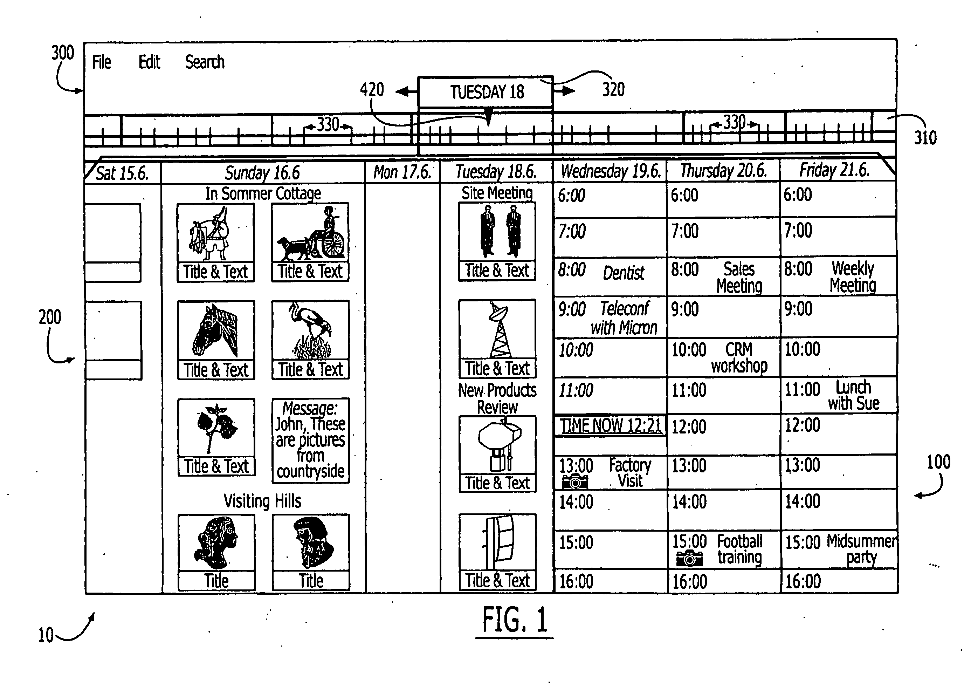

Figure 1 illustrates an example of a media diary application display **10** that provides a calendar view **100**, a media view **200** and a timeline view **300** with a media handle / speed browser **320**, in accordance with an embodiment of the present invention. The timeline view will incorporate a speed browser that takes the form of a media handle that can be moved from left to right or the display to adjust the scrolling speed. In accordance with embodiments of the present invention, a more detailed description of the speed browser, its functionality and methods for use will be provided for later in the detailed description.

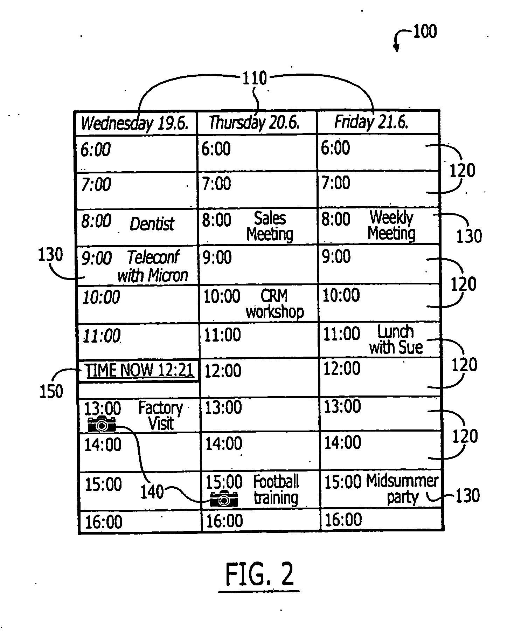

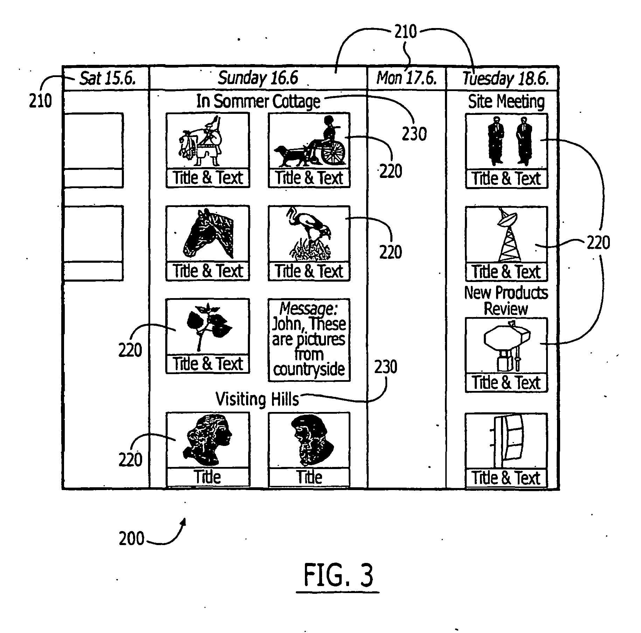

In order to better understand the media diary application display **10** of Figure 1, isolated representations of an exemplary calendar view and media view are presented in Figures 2 and 3.

Figure 2 illustrates an example of a calendar view 100 that provides for the entry of calendar events and provides the user with a daily planner application. The calendar view may be displayed in conjunction with the media view and the time line view to present the media handle / speed browser, in accordance with an embodiment of the present invention. The calendar view may be generated by computer-readable program instructions implemented in association with a digital device. It is noted that the calendar view herein depicted and described is by way of example only; other calendar views that provide for the display of calendar events or reminders are also contemplated and within the inventive concepts herein disclosed. While the calendar view is typically associated with future time periods, future events and future reminders, it may also possible for the calendar view to display past time periods, past events and past reminders. Alternatively, the calendar view may be generated by another calendar or personal planner application, in which case, the calendar view is imported into the media diary application from the auxiliary calendar application.

The calendar view includes date columns **110**, which correspond to a specific date. In the example shown, three date columns are visible on the display corresponding to the current date (i.e., Wednesday, 19 June) and the subsequent two dates. Typically, upon activation of the calendar view the current date will be displayed in the left-hand column of the calendar view with columns for the subsequent dates positioned sequentially to the right. As will be apparent, the calendar view may be differently oriented, such as with rows as opposed to columns or the current date may be displayed in the right hand column, if so desired. In an alternate embodiment the calendar view may include columns **110**, which may correspond to any moment of time, such as year, month, day, hour or the like. Additionally upon activation of the calendar view the current moment of time may be displayed on the middle of the view.

The date columns **110** include multiple time blocks **120**, which provide a descriptive area for information related to calendar events **130**. In the embodiment shown, the time blocks correspond to one-hour time blocks, although the blocks may be for other lengths of time, such as 30-minute blocks. Further, for example if a column represents a year, the time block **120** may represent a month. The calendar view will be vertically scrollable, so that, all of the time blocks for a date column will be viewable by the user. In addition, the calendar view will typically be horizontally scrollable to provide for a view of other date or time columns **110**. In addition, the time blocks may include reminder icons **140**, which provide the media diary user a visual reminder related to an upcoming calendar event. For example in the depicted embodiment, the camera icon reminds the user that calendared event requires or will benefit from a having a camera on-hand.

The information related to calendar events **130** will typically be inputted by the user and include information, such as title of the event, topic of the event, date and time of the event, location of the event, individuals attending the event and the like. A calendar event may be inputted by activating, via keystroke or mouse-type input signal, the time block associated with the event. Upon activation, a window or view is made visible that allows for the user to input information related to the event. Once the calendar event has been inputted and text displayed in the time block, the details of the calendar events may be accessible by activating, via keystroke or mouse-type input signal, the calendar event. In addition to manually inputting calendar events, the media diary may import calendar events from other sources or applications that are being executed on the digital device, such as from other, internal or external, personal planner or calendar applications, email systems or the like. Further, the information related to a calendar event **130** creates metadata information related to the calendar event or reminder.

The time blocks **120** may include a time now indicator **150** that may be accentuated in bold-faced type or other way graphically accentuated in the time block that includes the current time. The time now indicator serves to indicate the current moment of time. The time now indicator will be an active indicator that displays the current time, in hour and minutes, and moves forward to the next time block with the passage of time. In addition, the calendar view **100** may graphically distinguish between time blocks and calendar events that are in the past and time blocks and calendar events that are in the future. In the illustrated example, time blocks and events in the past are designated by italicized text and time blocks and events in the future are designated by non-italicized, standard text. As the time now indicator moves to the next time block to indicate the passage of time, the distinguishing graphics of the time blocks and calendar events will also change to indicate the proper time state.

Figure 3 illustrates an example of a media view **200** that provides for digital media files, such as digital images, digital video, digital audio, computer games, computer software, digital text files or the like, to be accessible to the media diary user, in accordance with an embodiment of the present invention. Typically the media files that are represented in the media view will be associated to a past calendar event or past reminder. The media view will be generated by second computer-readable program instructions implemented in association with a digital device. It is noted that the media view herein depicted and described is by way of example only; other media views that provide for the display of media file representations in association with a moment of time or a time period are also contemplated and within the inventive concepts herein disclosed. Alternatively, the media files that are represented in the media view may be associated with a moment or period of time based on a timestamp in the media file, without having noted an event related to the media file, in advance, in the calendar view or application.

The media view of the illustrated embodiment includes date columns **210**, which correspond to a specific date, although the media view may be differently oriented if so desired. In the example shown, four date columns are visible on the display corresponding to the four previous dates. In an alternate embodiment the media view may include columns 210, which may correspond to any moment of time, such as a year, a month, a week, a day, an hour or the like. The date columns will include media file representations **220** that are related to media files and are connected, in time, to the specific date, event and/or time. For example, the media file representations may include representations that provide the user with access to digital files, such as video files, image files, audio files, text files, emails, short message service (SMS) messages, multimedia message service (MMS) messages and the like and provide the user with information pertaining to the content of the files. The media file representations may include an icon, or a thumbnail image, a portion of the text of a text document or message or any other suitable media file representation with or without a title of the media file.

Typically, the media diary will receive the media file from a digital recording function associated with the device or via digital communication from other devices. For example:
1) If the digital device is a cellular telephone that incorporates a digital camera or any other digital device that serves as a digital recording device, a digital media file (i.e., image) may be communicated directly via cellular telephone access from the camera/telephone device to the media diary in another device.
2) If the digital device is an independent digital camera or any other digital recording/storing/playing device and equipped with a wireless or wireline network connection the digital media file may be communicated directly from networked device to a media diary in another device.
3) If the digital device is an independent digital camera or any other digital recording/storing/playing device and equipped with short range digital communication means the digital media file may communicated first to a long range digital communication device (i.e. cellular telephone, a PDA, laptop or the like) that then passes the files to another device with a media diary. Alternatively, in proximity, a file transfer may occur directly to another device with a media diary.
4) The media files may be communicated by a physical memory unit / device transferred from one device to another device.

As such, the digital recording/storing/playing device from which the media file is communicated (i.e., the passing device) may include, and implement, the media diary application or may not include the media diary application. If the passing device includes the media diary application, the media files may be processed for media diary purposes prior to communication to other devices.

The communication /synchronization of the media files may be automatic after a creation of a new media file, or after a certain amount of media files have been created. Alternatively, the communication may occur at a selected time or on a request of a user and may include a single media file or a group of media files. The communication/synchronization may occur via any wireless or wireline network communication method, such as for example via SMS, MMS or file transfer. The communication, i.e. synchronization, may also occur from a back end media diary application/device to any digital recording / storing / playing device with or without the media diary application.

The media file will typically have associated metadata, in the form of a timestamp, event name, file name, location information, people in the event or in the media file, objects in the media file, file type, file size or the like. The media file metadata may be automatically inputted by the digital recording device at the time of the creation of the media file or may be manually inputted, such as at the time of creation of the media file or receipt or transfer of the media file. In addition, it is possible for the metadata to previously exist in conjunction with a calendar event in the media diary and to be associated with the digital media file at the moment the file is created, if the device creating the media file executes the media diary application.

Once the media diary receives the media file, the media file metadata is combined and/or correlated with the calendar event information. The combined and/or correlated information is associated with the media file in the media view, such that, when a user accesses the media file via the media file representation the user will be presented with the combined metadata and calendar event information. See for example, media file representations 220 of Figure 3, in which, a thumbnail image is combined with a title and text entry.

Referring again to Figure 1, which depicts media application display **10** that is a combination of a calendar view **100**, a media view **200** and a timeline view **300**. The timeline portion of the view incorporates a speed browser, in accordance with an embodiment of the present invention. As depicted, the calendar view **100** is displayed on the right-hand side of the digital device's display, the media view **200** is displayed on the left-hand side of the display and the timeline view features are displayed above both the calendar view and the media view. The timeline view and, specifically, the speed browser will be generated by the computer-readable program instructions as implemented in association with a digital device. It is noted that the timeline view and, specifically, the speed browser herein depicted and described is by way of example only; other configurations of timeline views and speed browser that provide for the display of a timeline and speed browsing function in combination with a media view and a calendar view are also contemplated and within the inventive concepts herein disclosed.

The timeline view **300** of the illustrated embodiment provides for a time bar 310 and a media handle / speed browser **320**, also referred to as a time handle. The media handle / speed browser provides for the speed browsing function of the present invention. As depicted, the calendar view **100** displays the current date, indicated by a current time indicator **150**, and the two subsequent dates. The media view **200** displays the four previous dates.

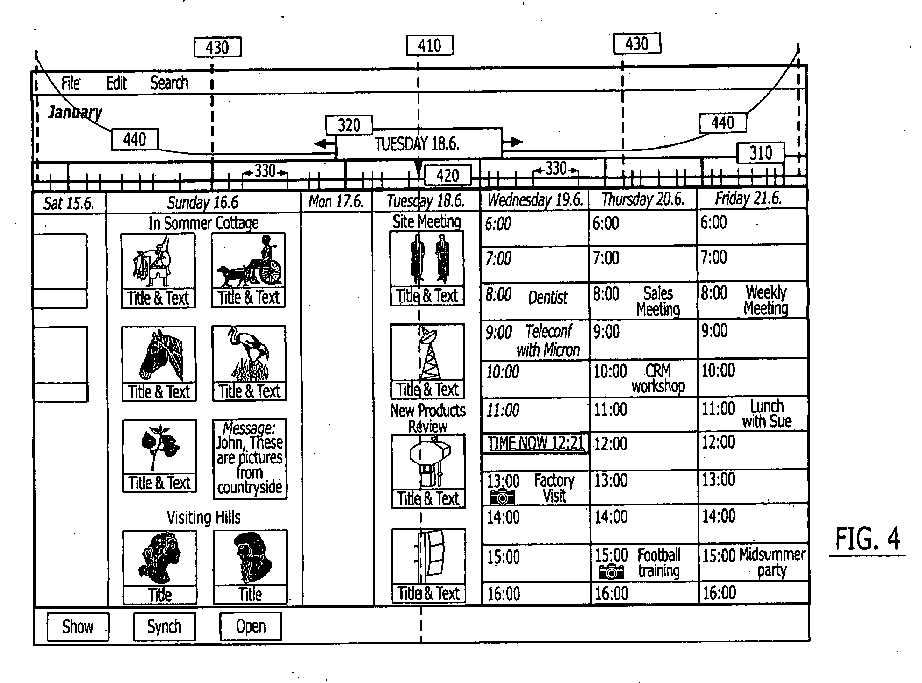

The media handle / speed browser **320** depicted in Figure 1 and 4 is shown in a stationary rest position, preferably in a centerline position, e.g. in Figure 1 related to a time bar, or related to display of the media diary application and in Figure 4 related to a media view. In the centerline position the media handle /speed browser is associated with an underlying column of the media view and the media handle / speed browser will display the date associated with the underlying column. Additionally, in the centerline position the media handle / speed browser will typically be associated with an underlying time unit, such as a day, of the time bar. The media handle / speed browser will display the time unit, such as the date, associated with the underlying time unit in the media handle.

The media handle / speed browser **320** will typically have a center mark **322** for indicating a center point of the media handle / speed browser. When the media handle is in a rest position, typically a centerline position, the center mark will point to an associated time unit **330** within the time bar **310**. This associated time unit will be indicated on the media handle and either the media view or the calendar view associated with the time unit will generally underlie the center mark. When the media handle is in a deviated position, the center mark will point to an associated time unit within the time bar and the media view or calendar view associated with that time unit will be presently scrolling in the viewable display.

In addition, in the rest position, the length of the media handle **320** will overlie the time units **330** in the time bar **310** that are currently being displayed in the media view **200** and/or calendar view **100**. In the illustrated example of Figure 1, the length of the media handle overlies at least a portion of seven time units, these seven times units correspond to the 7 days in the media and calendar views; 4 days in the media view (15 June - 18 June) and 3 days in the calendar view (19 June - 21 June). In this regard, media handle will automatically deviate in length to accommodate the amount of time units that are currently within the viewable area of the display. Areas of the time bar that do not underlie the media handle provide the user with a visible indication of media file content in time periods outside of those displayed in the viewing area.

In the manual mode movement of the media handle / speed browser is typically accomplished by keystroke or mouse-type activation. Typically a click and drag function of a mouse type interface is used to move the media handle /speed browser to the left or to the right. For example, if the user moves the media handle / speed browser to the left, the calendar view and media view will scroll to the right, such that, more past dates in the media view will be displayed. If the user moves the media handle / speed browser to the right, the calendar view and media view will scroll to the left; such that, more future dates in the calendar view will be displayed.

The media handle / speed browser may also be deviated automatically to locate a specific moment of time, period of time or event. The automatic mode is typically implemented in conjunction with a search function and provides for search results to be presented by automatically browsing to the area of the media view where the searched files reside.

If the media handle / speed browser **320** is deviated a relatively short distance from the center position, deliberate speed browsing will occur. In this instance, the time bar, the media view and/or the calendar view will move relatively slowly in the opposite direction of the deviation and the corresponding dates and media file representations will appear in the display area. If the media handle / speed browser is deviated a relatively long distance from the center position, fast speed browsing will occur. An example of a relatively long distance would be deviating the media handle to a position adjacent to a horizontal end of the display. In this instance, the time bar, the media view and/or calendar view will move relatively fast in the opposite direction of the deviation and the corresponding dates and media file representations will appear in the display area. Once the media handle / speed browser is released from the deviated position, the media handle / speed browser will stop speed browsing and return, automatically, to the rest position, such as the centerline position. Once the media handle / speed browser returns to the centerline position, the media handle / speed browser will indicate the date at the moment the media handle / speed browser was released from the deviated position and the media view column, calendar view column or time bar unit associated with the moment of time, such as the date, will underlie the center positioned media handle / speed browser.

For example, if the user of the media diary **10** wishes to access a date in the near past, the user will deviate the media handle / speed browser **320** a relatively short distance, e.g. to the left. Moving and holding the media handle a short distance to the left, will invoke deliberate speed browsing of the past dates. When the desired date is evident on the media handle / speed browser, the user may release the media handle / speed browser. Release of the media handle / speed browser will automatically reposition the media handle / speed browser in the centerline position and the desired date and associated media view or calendar view will underlie the media handle / speed browser.

Alternately, if the user of the media diary wishes to access a date in the distant past, the user will deviate the media handle, e.g. to the far left of the display (i.e., adjacent to the left side of the display), preferably along the time bar. Moving the media handle to the far left of the display, will invoke fast speed browsing of the dates. This entails hastily ramping up the browse function from a slow browsing speed to a fast browsing speed. When the user is in the near vicinity of the date they wish to access, the media handle can be released to move the time bar back to the centerline position. Releasing the media handle to reposition the media handle in the centerline position also repositions the time bar, the media view and the calendar view, accordingly. This will allow the user to focus in on the desired date by deviating the media handle a relatively short distance from the centerline. Alternatively, when the media bar is positioned to the far left of the display and the speed browsing function has moved into the vicinity of the desired date, the media handle / speed browser can be moved to the right to slow down the speed browsing function. Slowing down the speed browsing function will allow the user to focus in on the desired date and smoothly center the desired content in the media view.

Additionally, when the media handle / speed browser is deviated to a position that invokes fast speed browsing, the browsing function may be configured to slow down for those specific dates that have media files associated with them. Slowing down the speed browse function to a monitoring speed will allow the user to view the media file representations in the media view or the calendar events in the calendar view to determine if the media file or calendar event is the specific one which the user wishes to access.

Figure 4 provides an illustrative example of how the speed browsing function of the media handle is implemented, in accordance with an embodiment of the present invention. The media handle **320** is initially in a stationary position, as depicted the stationary position centers the media handle with the center line **410.** As such, in the depicted stationary position the center mark **420** of the media handle resides on the center line. When the media handle is deviated from the stationary position (i.e., move left or right from the center line) the view of the media diary application will scroll in the direction opposite of the direction of the deviation. Thus, as depicted, deviation of the media handle to the right, will scroll more of the calendar view into the viewable area of the display and deviation of the media handle to the left, will scroll more of the media view, and associated media file representations, into the viewable area of the display.

When the media handle **320** is deviated a predefined "short" distance the scrolling that results is deliberate step-wise scrolling in accordance with the time units **330** in the underlying time bar **310**. In the illustrated example the predefined "short" distance is defined as the distance between imaginary marks **430**. As long as the media handle is deviated between marks **430**, the step-wise scrolling is limited to the underlying media or calendar view (i.e., the time bar remains stationary). Thus, as the media handle is moved, the center mark **420** will point to the time unit that will move to the centerline in the absence of further movement of the time handle. For example, if the time units 330 in the illustrated example are days, as the media handle is moved, once the center mark encounters the time unit on the time bar, the date associated with the time unit will be displayed in the media handle, the date will be scrolled into the media view or calendar view, and associated media file representations or calendar event reminders will be visible on the display proximate the centerline **410**.

Once the center mark **420** of the media handle **320** is deviated beyond the predefined "short" distance (i.e., mark **430**), the time bar will scroll simultaneous with scrolling of the underlying media view or calendar view. When the extent of the deviation is further increased beyond mark **430** the scrolling speed will increase, such as in a linear fashion or an exponential fashion, as indicated by the speed line **440**, this is referred to as accelerated or speed browsing. The speed line is shown for illustrative purposes only and does not actually appear in the timeline view of the media diary application. In the accelerated browsing mode, the media handle may be held in a stationary position to provide for accelerated browsing through periods of time. Additionally, in the accelerated browsing mode the center mark of the media handle will point to a time unit in the scrolling time bar, the time unit will be rapidly be displayed in the media handle and the media view and/calendar view will be rapidly scrolled. Once the deviated media handle is released, it returns, automatically, to a rest position, typically the centerline **410** position. The time unit that the center mark points to, as well as, the media handle become centered in the display.

In accordance with alternate embodiments of the present invention, the user may configure the speed browser such that parameters other than time are browsed. For example, the speed browser may be configured to browse (1) certain types of media files (i.e., video, audio, etc), (2) media files designated with a specific bookmark, (3) media file representations that are enlarged or framed, (4) specific annotated dates or time periods, (5) specific dates with greater than a specified number of media files, (6) or any other item of metadata associated with the media file in addition to those mentioned above, or any other suitable parameter can be defined for the purpose of browsing in any combination of the above. In this instance, the media diary may be configured with a speed browser search function and/or a menu for selecting the speed browser parameter of interest.

For example, if the speed browser is configured by the user to browse for video files, the browser will move to those areas within the media view that include video files and other dates that do not include video files will be moved over in the browsing function. In this example, if the media handle is deviated to provide for fast speed browsing, the browse function may include a slow down speed to a monitoring speed when a media view displays video files, to allow the user to assess their desire to access the represented video files. After a duration of browsing in the monitoring speed, long enough to allow the user to assess the displayed video file representations, the speed browser will again accelerate to a fast browse mode until the next media view having video files is encountered and browsing is once again slowed down.

Alternatively, if the speed browser is configured to search for a specific media file, the browser may be configured to speed browse to the desired media file and to immediately discontinue the browse function once the media file has been browsed into the display area. The browsing will start again by deviating or clicking the media handle again, e.g. by a mouse-type activation or keystroke.

In another embodiment, if the speed browser is configured by the user to browse any combination of items of metadata in a media file, such as e.g. for video files, when the media handle is deviated or clicked by a mouse cursor the browser will immediate move or step to the first area, such as a day, within media view that includes video files and other dates that do not include video files will be skipped over. When the media handle is deviated or clicked by a mouse cursor again the browser will immediate move or step to the next area within media view that includes video files and other dates that do not include video files will be skipped over. In this example, the browser is to provide for fast browsing by skipping, automatically. dates that do not include the determined combination of items of metadata, such as video files.

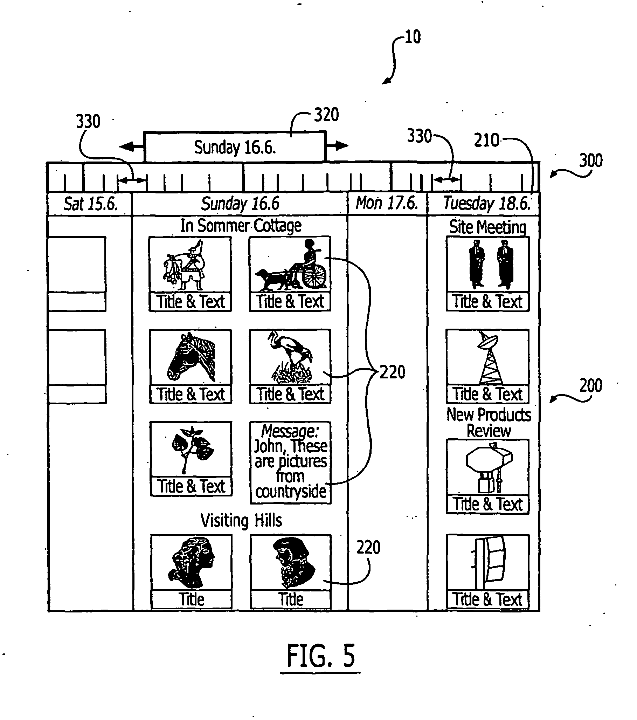

Figure 5 illustrates an alternate embodiment of the present invention, in which, the media diary display includes a combination of a media view 200 and a media handle / speed browser 320. In this embodiment, the computer-readable program instructions will generate a media view that provides access to digital media files and associates digital media files with a period of time. The instructions will additionally generate a media handle / speed browser. The media view includes date columns **210**, which correspond to a specific date. In the example shown, four date columns are visible on the display corresponding to four dates. The date columns will include media file representations **220** that are related to media files and are connected, in time, to the specific date and may further be connected within a date to a specific topic. For example, the media file representations may include representations that provide the user with access to digital files, such as video files, image files, audio files text files and the like and provide the user with information pertaining to the content of the files. The media file representations may include an image and title of a digital image or video file, a portion of the text of a text message or any other suitable media file representation.

In this embodiment of the invention, the date columns may include both past dates, present dates and future dates. While most media files will be categorized in past date columns it is possible for media events to be categorized in future date columns. For example, a yet-to-be presented multi-media presentation can be categorized under a future date column.

The features of the timeline view **300** will include a media handle / speed browser **320**. The media handle / speed browser will typically be visible in the timeline view and be centered in the visible display in a stationary position. In the same manner as described above, the media handle / speed browser can be moved to the left or right on the display to provide for browsing of the dates within the media view. The media handle / speed browser of the Figure 5 embodiment will have all the configuration and functionality possibilities that have been described above in relation to Figures 3 and 4.

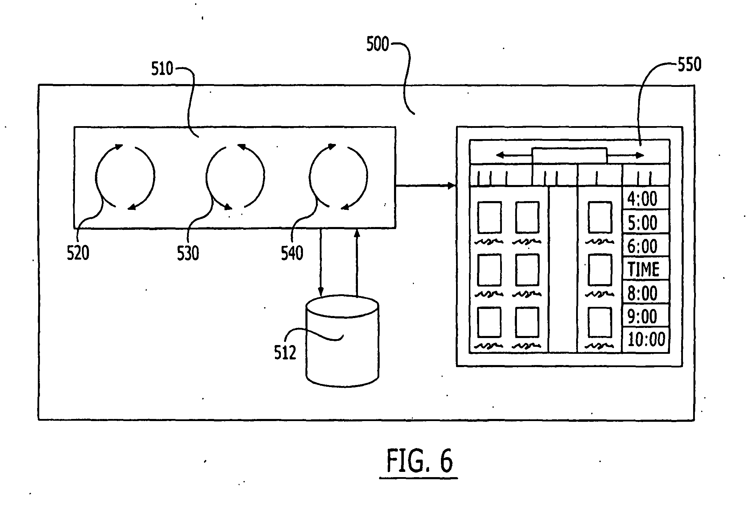

A further embodiment of the invention is defined by a digital device that implements the media diary application and specifically the speed browser aspect of the media diary, in accordance with an embodiment of the present invention. Figure 6 illustrates a block diagram of digital device **500** that implements the media diary. As previously noted, the digital device may be a digital device capable of digital communication by any means of network or by portable memory unit with other digital devices, such as a mobile terminal including for example, a mobile telephone, a PDA, laptop computer, a digital camera, a digital video camera, electronic book device, digital audio recorder, personal computer, set-top box (STB), television or the like.

The digital device **500** will include a processing unit **510**, such as a processor, an application specific integrated circuit, analog and/or digital circuitry, or any other similar device that executes computer-readable program instructions for accessing media files. Wherein the program instructions and the media files are generally stored in memory device **512.** The computer-readable program instructions may include first instructions **520** for generating a media view that provides access to digital media files and associates digital media files with a period of time, and second instructions **530** for generating a calendar view that represents time in calendar format and associates events with respective periods of time and third instructions **540** for generating a speed browser that provides for the user to alter the speed of browsing function to efficiently locate media files within the media diary. In an alternate embodiment, the operating instructions may be limited to first instructions **520** for generating a media view that provides access to digital media files and associates digital media files with a period of time and second instructions **540** for generating a speed browser that provides for the user to alter the speed of browsing function to efficiently locate media files within the media diary. In addition, the digital device will include a display **550** that is in communication with the processing unit and provides a presentation mechanism for the calendar view and the media view.

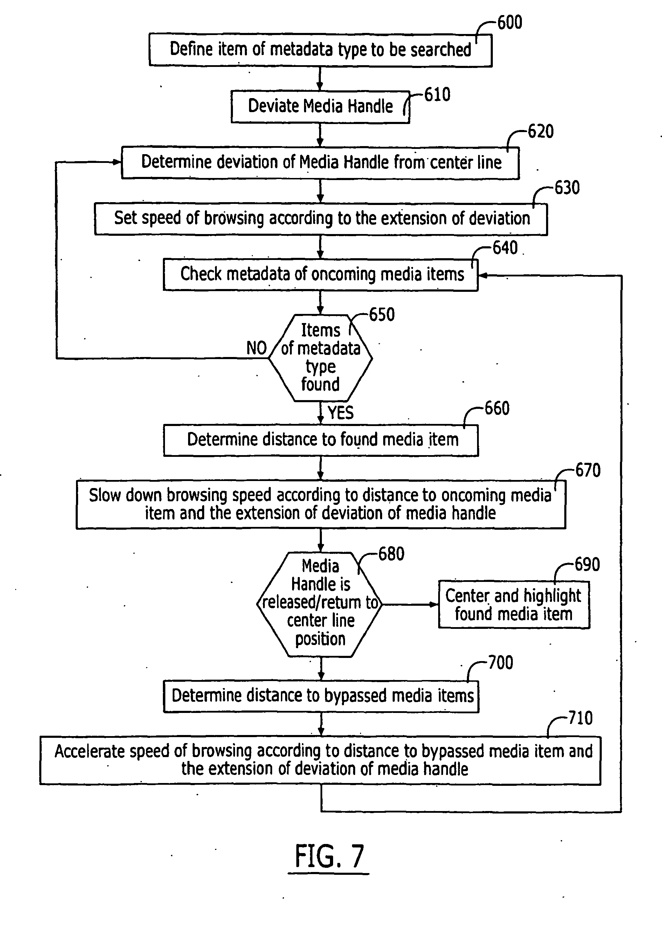

Additionally the invention is embodied in a method for automated browsing of media files in a media diary. Referring to the flow diagram of Figure 7, at step **600**, the user defines an item of metadata information that is to be browsed. Metadata is information, such as file type, file title, date file was created, file creator, etc., which is stored in association with the media file. For example, a user may choose to browse for all video files or the user may choose to browse for a particular media file having a specified title. Defining the browse criteria may involve a keyword search of the browse term or the browse criteria may be chosen from a menu of browse-able metadata items.

At step **610**, the browse function is initiated by deviating the media handle from the rest position, preferably the stationary centerline position on the digital device display. At stage **620**, the media diary determines an approximate length of deviation from the centerline necessary to locate the media file(s) that are being browsed and the media handle is automatically deviated the determined length. At step **630**, the browse function speed is set according to the amount that the media handle deviates from the centerline position. If the media handle deviates a relatively small degree from the centerline position the rate of browsing will be relatively slow and if the media handle deviates a relatively large degree from the centerline position the rate of browsing will be relatively fast. At step **640**, the system observes the media file representations and accompanying metadata information associated with media files as they are scrolled across the display to determine if one of the scrolled media files is the desired media file. Alternatively, the system observes metadata of the media files that are approaching the visible display area already before they enter the visible display area (in order to create smooth slow down of the scrolling). The distance of the observing, approaching media files may vary according to the speed of the browsing, i.e., greater distance when the browsing speed is high and vice versa, or it may be a constant.

At step **650**, the system determines if the media file and accompanying metadata information have been found. If they have not been found then the process returns to step **620**, where the system determines a deviation distance and further browsing occurs, iteratively, until the defined media file is found by the system. If the media has been found then, at step **660**, the system may estimate the distance remaining to be scrolled to bring the media file into the viewable area of the display. At step **670**, the system may slow down the browse speed by a predetermined manner, e.g. according to the distance to the approaching found media file and the extension of the deviation of the media handle from the centerline on the media view (or the display), in order to bring the media file within the viewable area of the display, thereby smoothly slowing the speed of browsing even though the user does not move the media handle. At step **680**, the media handle is released by the media diary application and the media handle returns to the centerline position.

After releasing the media handle, at step 690, the found media file, the relevant time unit (such as a date column) and the time bar are centered in the media view (or in the display) at the same time. If the desired media file has bypassed the centerline on the media view (or the display), at step 700, the system then determines the distance to the bypassing media file and, at step 710, accelerates the browsing speed by a predetermined manner, e.g. according to the distance to the bypassed media file and the extension of the deviation of the media handle from the centerline on the media view (or the display). The system will return to step 640 to observe the metadata of approaching media files and ascertain whether the approaching media files meet the browse criteria. The process continues, iteratively, until the system locates and displays all of desired media files that meet the browse criteria. Alternatively, when the desired media file has bypassed a visible area of the viewable display, at step 700, the system than determines the distance to the bypassed media file and, at step 710, accelerates the browsing speed by a predetermined rate.

The described embodiments of the present invention provide for a media diary or media management application implemented in a digital device that incorporates a speed browsing mechanism. The speed browsing mechanism provides for the speed of the browsing or scrolling function to be altered depending on the desire of the user. For example, if the media diary currently displays time periods that are distant from the desired time period, the user will desire a rapid browsing function. Conversely, if the media diary currently displays time periods that are close to the desired time period, the user will desire a deliberate browsing function. The speed browsing mechanism of the present invention provides the device user with a highly efficient means of locating time periods and the media files associated with the time periods. In addition, the speed browsing mechanism provides ergonomic benefit to the user, in that, user inputs to the device are limited and the user inputs that are required are user-friendly.

## Claims

1. A computer-implemented method for accessing media files on a digital device (500), comprising:
- generating a media view (200) on a display (550) of a digital device (500), said generated media view (200) providing access to digital media files by means of media file representations (220) displayed in association with a period of time;
- generating a media scrolling handle (320) that provides the ability to browse said digital media files in said generated media view (200) over several periods of time;
- providing means for a user to designate (600) a browse parameter chosen from items of metadata associated with the media files;
- providing the ability to browse for media files in accord with said designated browse parameter by scrolling (630) said media view (200) with associated media file representations across the display (550) according to a manually-controlled speed according to a distance that said media scrolling handle (320) is deviated (610) from a rest position of the media scrolling handle (320) on the display (550); and
- automatically decreasing the manually-controlled speed of the browsing when a media file in accord with the designated browse parameter enters the visible area of the display (550) or when a representation (220) of a media file in accord with the designated browse parameter is in the visible area of the display, so as to allow the user to assess if said media file is a specific one which the user wishes to access.

2. Method according to claim 1, further comprising, when a media file in accord with the designated browse parameter is approaching the visible area of the display, decreasing (670) the speed of the browsing in relation to the distance remaining to be scrolled to bring the approaching media file into the viewable area of the display (550) and the distance of the deviation (610) of the media scrolling handle (320) from the rest position.

3. Method according to claim 1, increasing (710) the speed of the browsing when a representation (220) of a media file in accord with the chosen browse parameter bypasses a centerline of the generated media view (200) or a centerline of the display (550) (410), or when a media file in accord with the chosen browse parameter has bypassed the visible area of the display.

4. Method according to claim 3, wherein, when a media file in accord with the chosen browse parameter has bypassed the visible area of the display, the speed of the browsing is increased (710) in relation to the distance of the bypassing media file and the distance of the deviation (610) of the media scrolling handle (320) from the rest position.

5. Method according to claim 1, further comprising associating digital media files with a period of time based upon information associated with the digital media file.

6. Method according to claim 1, further comprising stopping the speed browsing and automatically returning (680) the media scrolling handle (320) to the rest position when the media scrolling handle (320) is released (680) from the deviated position.

7. Method according to claim 1, wherein the item of metadata is chosen from the group consisting of time, media file type, media file size, media file bookmark, media file annotation, media file representation, media file title, media file name, topic, content, location, situation, preferences, contact information, names of people, names of electronic devices, technical information of electronic devices, items described in the media file and tables of content information.

8. Computer readable storage medium having computer-readable program instructions (520, 530, 540) embodied in the medium which upon execution by a processing unit (510) perform the steps of a method according to one of claims 1 to 7.

9. A digital device (500), comprising:
- a processing unit (510);
- a memory device (512) storing computer-readable program instructions (520, 530, 540) for accessing media files on said digital device (500) and adapted for storing media files;
- a display (550) in communication with said processing unit (510);
wherein
said processing unit (510) is adapted for executing said computer-readable program instructions for
- generating a media view (200) on said display, said generated media view (200) providing access to digital media files stored in said memory device (512) by means of media file representations (220) displayed in association with a period of time;
- generating a media scrolling handle (320) that provides the ability to browse said digital media files in said generated media view (200) over several periods of time;
- providing means for a user to designate (600) a browse parameter chosen from items of metadata associated with the media files;
- providing the ability to browse for media files in accord with said designated browse parameter by scrolling (630) said media view (200) with associated media file representations across the display (550) according to a manually-controlled speed being according to a distance that said media scrolling handle (320) is deviated (610) from a rest position of the media scrolling handle (320) on the display; and
- automatically decreasing the manually-controlled speed of the browsing when a media file in accord with the designated browse parameter enters the visible area of the display (550) or when a representation (220) of a media file in accord with the designated browse parameter is in the visible area of the display, so as to allow the user to assess if said media file is a specific one which the user wishes to access; and
the display (550) is adapted to present a combined view of the media view (200) and the media scrolling handle.

10. Digital device (500) according to claim 9, wherein said processing unit (510) is adapted for executing said computer-readable program instructions for
- decreasing (670), when a media file in accord with the designated browse parameter is approaching the visible area of the display, the speed of the browsing in relation to the distance remaining to be scrolled to bring the approaching media file into the viewable area of the display (550) and the distance of the deviation (610) of the media scrolling handle (320) from the rest position.

11. Digital device (500) according to claim 9, wherein said processing unit (510) is adapted for executing said computer-readable program instructions for
- increasing (710) the speed of the browsing when a representation (220) of a media file in accord with the chosen browse parameter bypasses a centerline of the generated media view (200) or a centerline of the display, or when a media file in accord with the chosen browse parameter has bypassed the visible area of the display.

12. Digital device (500) according to claim 11, wherein said processing unit (510) is adapted for executing said computer-readable program instructions for
- increasing (710), when a media file in accord with the chosen browse parameter has bypassed the visible area of the display, the speed of the browsing in relation to the distance of the bypassing media file and the distance of the deviation (610) of the media scrolling handle (320) from the rest position.

13. Digital device (500) according to claim 9, wherein said processing unit (510) is adapted for executing said computer-readable program instructions for
- associating digital media files with a period of time based upon information associated with the digital media file.

14. Digital device (500) according to claim 9, wherein said processing unit (510) is adapted for executing said computer-readable program instructions for
- stopping the speed browsing and automatically returning (680) the media scrolling handle (320) to the rest position when the media scrolling handle (320) is released (680) from the deviated position.

15. Digital device (500) according to claim 9, wherein the item of metadata is chosen from the group consisting of time, media file type, media file size, media file bookmark, media file annotation, media file representation, media file title, media file name, topic, content, location, situation, preferences, contact information, names of people, names of electronic devices, technical information of electronic devices, items described in the media file and tables of content information.

## Patentansprüche

1. Computer-implementiertes Verfahren für den Zugriff auf Mediendateien auf einer digitalen Vorrichtung (500), umfassend:
- Erzeugen einer Medienansicht (200) auf einer Anzeige (550) einer digitalen Vorrichtung (500), wobei die erzeugte Medienansicht (200) einen Zugriff auf digitale Mediendateien mittels Mediendatei-Darstellungen (220) bereitstellt, die in Verknüpfung mit einer Zeitspanne angezeigt werden;
- Erzeugen eines Medien-Scroll-Bedienelements (320), das die Möglichkeit bereitstellt, die digitalen Mediendateien in der erzeugten Medienansicht (200) über mehrere Zeitspannen zu durchsuchen;
- Bereitstellen von Mitteln für einen Benutzer, um einen Suchparameter anzugeben (600), der aus Metadatenobjekten ausgewählt wird, die mit den Mediendateien verknüpft sind;
- Bereitstellen der Möglichkeit, nach Mediendateien in Übereinstimmung mit dem angegebenen Suchparameter zu suchen, durch Scrollen (630) der Medienansicht (200) mit verknüpften Mediendatei-Darstellungen über die Anzeige (550) gemäß einer manuell gesteuerten Geschwindigkeit, die einer Entfernung entspricht, um die das Medien-Scroll-Bedienelement (320) auf der Anzeige (550) von einer Ruhestellung des Medien-Scroll-Bedienelements (320) ausgelenkt (610) ist; und
- automatisches Verringern der manuell gesteuerten Geschwindigkeit des Durchsuchens, wenn eine Mediendatei in Übereinstimmung mit dem angegebenen Suchparameter in den sichtbaren Bereich der Anzeige (550) eintritt oder wenn eine Darstellung (220) einer Mediendatei in Übereinstimmung mit dem angegebenen Suchparameter sich in dem sichtbaren Bereich der Anzeige befindet, um es dem Benutzer zu gestatten, zu beurteilen, ob die Mediendatei eine spezifische ist, auf die der Benutzer zugreifen möchte.

2. Verfahren nach Anspruch 1, weiter umfassend Verringern (670) der Geschwindigkeit des Durchsuchens im Verhältnis zu der Entfernung, die noch zu Scrollen verbleibt, um die sich annähernde Mediendatei in den sichtbaren Bereich der Anzeige (550) zu bringen, und der Entfernung der Auslenkung (610) das Medien-Scroll-Bedienelements (320) aus der Ruhestellung, wenn eine Mediendatei in Übereinstimmung mit dem angegebenen Suchparameter sich dem sichtbaren Bereich der Anzeige nähert.

3. Verfahren nach Anspruch 1, weiter umfassend Erhöhen (710) der Geschwindigkeit des Durchsuchens, wenn eine Darstellung (220) einer Mediendatei in Übereinstimmung mit dem ausgewählten Suchparameter an einer Mittellinie der erzeugten Medienansicht (200) oder einer Mittellinie (410) der Anzeige (550) vorbeizieht, oder wenn eine Mediendatei in Übereinstimmung mit dem ausgewählten Suchparameter durch den sichtbaren Bereich der Anzeige vorbeigezogen ist.

4. Verfahren nach Anspruch 3, wobei, wenn eine Mediendatei in Übereinstimmung mit dem ausgewählten Suchparameter durch den sichtbaren Bereich der Anzeige vorbeigezogen ist, die Geschwindigkeit des Durchsuchens im Verhältnis zu der Entfernung der vorbeiziehenden Mediendatei und der Entfernung der Auslenkung (610) des Medien-Scroll-Bedienelements (320) aus der Ruhestellung erhöht wird (710).

5. Verfahren nach Anspruch 1, weiter umfassend Verknüpfen von digitalen Mediendateien mit einer Zeitspanne, basierend auf Informationen, die mit der digitalen Mediendatei verknüpft sind.

6. Verfahren nach Anspruch 1, weiter umfassend Stoppen des schnellen Durchsuchens und automatisches Zurückführen (680) des Medien-Scroll-Bedienelements (320) in die Ruhestellung, wenn das Medien-Scroll-Bedienelement (320) aus der ausgelenkten Stellung freigegeben wird (680).

7. Verfahren nach Anspruch 1, wobei das Metadatenobjekt aus der Gruppe ausgewählt ist bestehend aus Zeit, Mediendateityp, Mediendateigröße, Mediendatei-Lesezeichen, Mediendateianmerkung, Mediendateidarstellung, Mediendateititel, Mediendateiname, Thema, Inhalt, Ort, Situation, Präferenzen, Kontaktinformationen, Namen von Personen, Namen von elektronischen Vorrichtungen, technischen Informationen von elektronischen Vorrichtungen, in der Mediendatei beschriebenen Objekten und Tabellen von Inhaltsinformationen.

8. Computerlesbares Speichermedium, mit auf dem Medium gespeicherten Programmanweisungen (520, 530, 540), die bei Ausführung durch eine Prozessoreinheit (510) die Schritte eines Verfahrens nach einem der Ansprüche 1 bis 7 ausführen.

9. Digitale Vorrichtung (500), umfassend:
- eine Prozessoreinheit (510);
- eine Speichervorrichtung (512), die computerlesbare Programmanweisungen (520, 530, 540) speichert, um auf Mediendateien auf der digitalen Vorrichtung (500) zuzugreifen, und die angepasst ist, um Mediendateien zu speichern;
- eine Anzeige (550) in Verbindung mit der Prozessoreinheit (510);
wobei
die Prozessoreinheit (510) angepasst ist zum Ausführen der computerlesbaren Programmanweisungen zum
- Erzeugen einer Medienansicht (200) auf der Anzeige, wobei die erzeugte Medienansicht (200) einen Zugriff auf digitale Mediendateien, die in der Speichervorrichtung (512) gespeichert sind, mittels Mediendatei-Darstellungen (220) bereitstellt, die in Verknüpfung mit einer Zeitspanne angezeigt werden;
- Erzeugen eines Medien-Scroll-Bedienelements (320), das die Möglichkeit bereitstellt, die digitalen Mediendateien in der erzeugten Medienansicht (200) über mehrere Zeitspannen zu durchsuchen;
- Bereitstellen von Mitteln für einen Benutzer, um einen Suchparameter anzugeben (600), der aus Metadatenobjekten ausgewählt wird, die mit den Mediendateien verknüpft sind;
- Bereitstellen der Möglichkeit, nach Mediendateien in Übereinstimmung mit dem angegebenen Suchparameter zu suchen, durch Scrollen (630) der Medienansicht (200) mit verknüpften Mediendatei-Darstellungen über die Anzeige (550) gemäß einer manuell gesteuerten Geschwindigkeit, die einer Entfernung entspricht, um die das Medien-Scroll-Bedienelement (320) auf der Anzeige (550) von einer Ruhestellung des Medien-Scroll-Bedienelements (320) ausgelenkt (610) ist; und
- automatisches Verringern der manuell gesteuerten Geschwindigkeit des Durchsuchens, wenn eine Mediendatei in Übereinstimmung mit dem angegebenen Suchparameter in den sichtbaren Bereich der Anzeige (550) eintritt oder wenn eine Darstellung (220) einer Mediendatei in Übereinstimmung mit dem angegebenen Suchparameter sich in dem sichtbaren Bereich der Anzeige befindet, um es dem Benutzer zu gestatten, zu beurteilen, ob die Mediendatei eine spezifische ist, auf die der Benutzer zugreifen möchte;
und
- wobei die Anzeige (550) eine kombinierte Ansicht der Medienansicht (200) und des Medien-Scroll-Bedienelements anzuzeigen.

10. Digitale Vorrichtung (500) nach Anspruch 9, wobei die Prozessoreinheit (510) angepasst ist zum Ausführen der computerlesbaren Programmanweisungen zum
- Verringern (670) der Geschwindigkeit des Durchsuchens im Verhältnis zu der Entfernung, die noch zu Scrollen verbleibt, um die sich annähernde Mediendatei in den sichtbaren Bereich der Anzeige (550) zu bringen, und der Entfernung der Auslenkung (610) des Medien-Scroll-Bedienelements (320) aus der Ruhestellung, wenn eine Mediendatei in Übereinstimmung mit dem angegebenen Suchparameter sich dem sichtbaren Bereich der Anzeige nähert.

11. Digitale Vorrichtung (500) nach Anspruch 9, wobei die Prozessoreinheit (510) angepasst ist zum Ausführen der computerlesbaren Programmanweisungen zum
- Erhöhen (710) der Geschwindigkeit des Durchsuchens, wenn eine Darstellung (220) einer Mediendatei in Übereinstimmung mit dem ausgewählten Suchparameter an einer Mittellinie der erzeugten Medienansicht (200) oder einer Mittellinie der Anzeige (550) vorbeizieht, oder wenn eine Mediendatei in Übereinstimmung mit dem ausgewählten Suchparameter durch den sichtbaren Bereich der Anzeige vorbeigezogen ist.

12. Digitale Vorrichtung (500) nach Anspruch 11, wobei die Prozessoreinheit (510) angepasst ist zum Ausführen der computerlesbaren Programmanweisungen zum
- Erhöhen (710) der Geschwindigkeit des Durchsuchens im Verhältnis zu der Entfernung der vorbeiziehenden Mediendatei und der Entfernung der Auslenkung (610) des Medien-Scroll-Bedienelements (320) aus der Ruhestellung, wenn eine Mediendatei in Übereinstimmung mit dem ausgewählten Suchparameter durch den sichtbaren Bereich der Anzeige vorbeigezogen ist.

13. Digitale Vorrichtung (500) nach Anspruch 9, wobei die Prozessoreinheit (510) angepasst ist zum Ausführen der computerlesbaren Programmanweisungen zum
- Verknüpfen von digitalen Mediendateien mit einer Zeitspanne, basierend auf Informationen, die mit der digitalen Mediendatei verknüpft sind.

14. Digitale Vorrichtung (500) nach Anspruch 9, wobei die Prozessoreinheit (510) angepasst ist zum Ausführen der computerlesbaren Programmanweisungen zum
- Stoppen des schnellen Durchsuchens und automatischen Zurückführen (680) des Medien-Scroll-Bedienelements (320) in die Ruhestellung, wenn das Medien-Scroll-Bedienelement (320) aus der ausgelenkten Stellung freigegeben wird (680).

15. Digitale Vorrichtung (500) nach Anspruch 9, wobei das Metadatenobjekt aus der Gruppe ausgewählt ist bestehend aus Zeit, Mediendateityp, Mediendateigröße, Mediendatei-Lesezeichen, Mediendateianmerkung, Mediendateidarstellung, Mediendateititel, Mediendateiname, Thema, Inhalt, Ort, Situation, Präferenzen, Kontaktinformationen, Namen von Personen, Namen von elektronischen Vorrichtungen, technischen Informationen von elektronischen Vorrichtungen, in der Mediendatei beschriebenen Objekten und Tabellen von Inhaltsinformationen.

## Revendications

1. Procédé mis en oeuvre par un ordinateur, pour accéder à des fichiers multimédias sur un dispositif numérique (500), comprenant les étapes consistant à :
- générer une vue multimédia (200) sur un écran (550) d'un dispositif numérique (500), ladite vue multimédia générée (200) donnant accès à des fichiers multimédias numériques au moyen de représentations de fichiers multimédias (220) affichées en association avec une période de temps ;
- générer une poignée de défilement multimédia (320) qui offre la possibilité d'explorer lesdits fichiers multimédias numériques dans ladite vue multimédia générée (200), sur plusieurs périodes de temps ;
- fournir un moyen permettant à un utilisateur de désigner (600) un paramètre d'exploration choisi à partir d'éléments de métadonnées associés aux fichiers multimédias ;
- offrir la possibilité d'explorer des fichiers multimédias correspondant audit paramètre d'exploration désigné en faisant défiler (630) ladite vue multimédia (200) avec des représentations de fichiers multimédias associées au travers de l'écran (550), selon une vitesse commandée manuellement à une distance sur laquelle ladite poignée de défilement multimédia (320) est déviée (610) à partir d'une position de repos de la poignée de défilement multimédia (320) sur l'écran (550) ; et
- diminuer automatiquement la vitesse commandée manuellement de l'exploration lorsqu'un fichier multimédia correspondant au paramètre d'exploration désigné entre dans la zone visible de l'écran (550), ou lorsqu'une représentation (220) d'un fichier multimédia correspondant au paramètre d'exploration désigné se trouve dans la zone visible de l'écran, de manière à permettre à l'utilisateur d'apprécier si ledit fichier multimédia est un fichier spécifique auquel l'utilisateur souhaite accéder.

2. Procédé selon la revendication 1, comprenant en outre l'étape consistant à, lorsqu'un fichier multimédia correspondant au paramètre d'exploration désigné s'approche de la zone visible de l'écran, diminuer (670) la vitesse de l'exploration par rapport à la distance restant à faire défiler pour amener le fichier multimédia en approche dans la zone visible de l'écran (550) et par rapport à la distance de l'écart (610) entre la poignée de défilement multimédia (320) et la position de repos.

3. Procédé selon la revendication 1, comportant l'étape consistant à augmenter (710) la vitesse de l'exploration lorsqu'une représentation (220) d'un fichier multimédia correspondant au paramètre d'exploration choisi contourne une ligne médiane de la vue multimédia générée (200) ou une ligne médiane de l'écran (550) (410), ou lorsqu'un fichier multimédia correspondant au paramètre d'exploration choisi a contourné la zone visible de l'écran.

4. Procédé selon la revendication 3, dans lequel, lorsqu'un fichier multimédia correspondant au paramètre d'exploration choisi a contourné la zone visible de l'écran, la vitesse de l'exploration est augmentée (710) par rapport à la distance du fichier multimédia en contournement, et à la distance de l'écart (610) entre la poignée de défilement multimédia (320) et la position de repos.

5. Procédé selon la revendication 1, comprenant en outre l'étape consistant à associer des fichiers multimédias numériques à une période de temps, sur la base d'informations associées au fichier multimédia numérique.

6. Procédé selon la revendication 1, comprenant en outre l'étape consistant à mettre fin à l'exploration rapide et à ramener automatiquement (680) la poignée de défilement multimédia (320) vers la position de repos lorsque la poignée de défilement multimédia (320) est libérée (680) de la position déviée.

7. Procédé selon la revendication 1, dans lequel l'élément de métadonnées est choisi dans le groupe comportant les éléments ci-après : une heure, un type de fichier multimédia, une taille de fichier multimédia, un signet de fichier multimédia, une annotation de fichier multimédia, une représentation de fichiers multimédias, un titre de fichier multimédia, un nom de fichier multimédia, un thème, un contenu, un emplacement, une situation, des préférences, des informations de contact, des noms de personnes, des noms de dispositifs électroniques, des informations techniques de dispositifs électroniques, des éléments décrits dans le fichier multimédia et des tables d'informations de contenu.

8. Support de stockage lisible par un ordinateur, comportant des instructions de programme lisibles par un ordinateur (520, 530, 540), intégrées dans le support lesquelles, lors d'une exécution par une unité de traitement (510), mettent en oeuvre les étapes d'un procédé selon l'une quelconque des revendications 1 à 7.

9. Dispositif numérique (500), comprenant :
- une unité de traitement (510) ;
- un dispositif de mémoire (512) stockant des instructions de programme lisibles par un ordinateur (520, 530, 540) pour accéder à des fichiers multimédias sur ledit dispositif numérique (500) et apte à stocker des fichiers multimédias ;
- un écran (550) en communication avec ladite unité de traitement (510) ;
dans lequel
ladite unité de traitement (510) est apte à exécuter lesdites instructions de programme lisibles par un ordinateur pour :
- générer une vue multimédia (200) sur ledit écran, ladite vue multimédia générée (200) donnant accès à des fichiers multimédias numériques stockés dans ledit dispositif de mémoire (512) au moyen de représentations de fichiers multimédias (220) affichées en association avec une période de temps ;
- générer une poignée de défilement multimédia (320) qui offre la possibilité d'explorer lesdits fichiers multimédias numériques dans ladite vue multimédia générée (200), sur plusieurs périodes de temps ;
- fournir un moyen permettant à un utilisateur de désigner (600) un paramètre d'exploration choisi à partir d'éléments de métadonnées associés aux fichiers multimédias ;
- offrir la possibilité d'explorer des fichiers multimédias correspondant audit paramètre d'exploration désigné en faisant défiler (630) ladite vue multimédia (200) avec des représentations de fichiers multimédias associées au travers de l'écran (550), selon une vitesse commandée manuellement qui est à une distance sur laquelle ladite poignée de défilement multimédia (320) est déviée (610) à partir d'une position de repos de la poignée de défilement multimédia (320) sur l'écran ; et
- diminuer automatiquement la vitesse commandée manuellement de l'exploration lorsqu'un fichier multimédia correspondant au paramètre d'exploration désigné entre dans la zone visible de l'écran (550), ou lorsqu'une représentation (220) d'un fichier multimédia correspondant au paramètre d'exploration désigné se trouve dans la zone visible de l'écran, de manière à permettre à l'utilisateur d'apprécier si ledit fichier multimédia est un fichier spécifique auquel l'utilisateur souhaite accéder ; et l'écran (550) est apte à présenter une vue combinée de la vue multimédia (200) et de la poignée de défilement multimédia.

10. Dispositif numérique (500) selon la revendication 9, dans lequel ladite unité de traitement (510) est apte à exécuter lesdites instructions de programme lisibles par ordinateur pour :
- diminuer (670), lorsqu'un fichier multimédia correspondant au paramètre d'exploration désigné s'approche de la zone visible de l'écran, la vitesse de l'exploration par rapport à la distance restant à faire défiler pour amener le fichier multimédia en approche dans la zone visible de l'écran (550) et par rapport à la distance de l'écart (610) entre la poignée de défilement multimédia (320) et la position de repos.

11. Dispositif numérique (500) selon la revendication 9, dans lequel ladite unité de traitement (510) est apte à exécuter lesdites instructions de programme lisibles par ordinateur pour :
- augmenter (710) la vitesse de l'exploration lorsqu'une représentation (220) d'un fichier multimédia correspondant au paramètre d'exploration choisi contourne une ligne médiane de la vue multimédia générée (200) ou une ligne médiane de l'écran, ou lorsqu'un fichier multimédia correspondant au paramètre d'exploration choisi a contourné la zone visible de l'écran.

12. Dispositif numérique (500) selon la revendication 11, dans lequel ladite unité de traitement (510) est apte à exécuter lesdites instructions de programme lisibles par ordinateur pour :
- augmenter (710), lorsqu'un fichier multimédia correspondant au paramètre d'exploration choisi a contourné la zone visible de l'écran, la vitesse de l'exploration par rapport à la distance du fichier multimédia en contournement, et à la distance de l'écart (610) entre la poignée de défilement multimédia (320) et la position de repos.

13. Dispositif numérique (500) selon la revendication 9, dans lequel ladite unité de traitement (510) est apte à exécuter lesdites instructions de programme lisibles par ordinateur pour :
- associer des fichiers multimédias numériques à une période de temps sur la base d'informations associées au fichier multimédia numérique.

14. Dispositif numérique (500) selon la revendication 9, dans lequel ladite unité de traitement (510) est apte à exécuter lesdites instructions de programme lisibles par ordinateur pour
- mettre fin à l'exploration rapide et ramener automatiquement (680) la poignée de défilement multimédia (320) vers la position de repos lorsque la poignée de défilement multimédia (320) est libérée (680) de la position déviée.

15. Dispositif numérique (500) selon la revendication 9, dans lequel l'élément de métadonnées est choisi dans le groupe comportant les éléments ci-après : une heure, un type de fichier multimédia, une taille de fichier multimédia, un signet de fichier multimédia, une annotation de fichier multimédia, une représentation de fichiers multimédias, un titre de fichier multimédia, un nom de fichier multimédia, un thème, un contenu, un emplacement, une situation, des préférences, des informations de contact, des noms de personnes, des noms de dispositifs électroniques, des informations techniques de dispositifs électroniques, des éléments décrits dans le fichier multimédia et des tables d'informations de contenu.
